# EUROPEAN PATENT SPECIFICATION

(11) **EP 2 864 417 B1**
(45) Date of publication and mention of the grant of the patent: **09.01.2019**
(21) Application number: 13807653.4
(22) Date of filing: 21.06.2013
(51) Int. Cl.: C08L 39/04, C08F 226/06, B01J 20/00, A01N 43/34, A01N 43/48, A01N 43/64, C02F 1/58, C02F 101/38

(54) **POLYMER AND METHOD OF USE**
POLYMER UND VERFAHREN ZUR VERWENDUNG
POLYMÈRE ET SON PROCÉDÉ D'UTILISATION

(30) Priority: 21.06.2012 NZ 60079712
(43) Date of publication of application: 29.04.2015
(73) Proprietor: Ligar Limited Partnership, Hamilton 3214 (NZ)
(72) Inventor: PETCU, Miruna, Hamilton 3210 (NZ)
(74) Representative: Elsy, David
(86) International application number: PCT/IB2013/055092
(87) International publication number: WO 2013/190506

(56) References cited:
- WO-A1-01/19886
- WO-A1-2006/001721
- WO-A1-2006/001721
- WO-A1-2010/085851
- DE-A1-102004 032 430
- JP-A- H1 075 779
- GOZDE B. ET AL.: 'Selective Removal of Bilirubin from Human Plasma with Bilirubin- Imprinted Particles' IND. ENG. CHEM. RES. vol. 46, 2007, pages 2843 - 2852, XP055181949

## Description

### TECHNICAL FIELD

This invention relates to a molecularly imprinted polymer capable of binding agricultural chemicals having heterocyclic rings and to applications using the polymer.

### BACKGROUND

Crops are vulnerable to fungal diseases, insect attack and competition from weeds in many of the locations where they are grown. Consequently growers frequently treat their crops with agricultural chemicals. When used, agricultural chemical residues are often present in low amounts in crops that are harvested. Additionally, products resulting from the harvested crop also contain low amounts of agricultural chemical residues, including juice and oils.

Avoiding or reducing agricultural chemical use near to harvest time results in a corresponding decrease of the concentration levels of agricultural chemicals in harvested crops and the resulting products, but can have a corresponding decrease in crop yield and quality if agricultural chemicals are not used.

The presence of agricultural chemicals in wine for example is of concern for several reasons including that retailers and consumers prefer wine to be free of agricultural chemicals. Consequently certain agricultural chemicals which are highly effective and offer the advantage of a later harvest of higher quality wine are not used as they consistently leave unacceptable levels of agricultural chemical residue in wine.

Agricultural chemicals as insecticides, herbicides and other biocides applied to crops can also end up in drinking water supplies, eventually being consumed by humans and animals.

Agricultural chemicals can also contaminate the environment, particularly where water runs from the site of application of the chemical into nearby streams, rivers and lakes, or from production processes discharging waste water into streams, rivers and lakes. One example of such a process is carpet making using wool, where the waste water used in the production of woollen carpet contains agricultural chemicals such as insecticides and anthelmintics.

Molecularly-imprinted polymers are polymers with an antibody-like ability to bind and discriminate between molecules. These are formed by the synthesis of cross-linked polymers in the presence of templates, which may be the small molecule of interest and removal of the small molecule from the template to generate a structure complementary to the template structure or to an analogous structure. The polymer before removal of a small molecule may bind the small molecule covalently or it may be bound non-covalently.

To date the commercialisation of such polymers has generally not been successful. One reason for this is that the existing polymers used do not bind the target molecules with sufficient specificity in aqueous biological samples. Another reason for the lack of commercialisation of polymers relates to the difficulties of scaling up the use of polymer technologies, something which the current invention has overcome.

It is an object of this invention to provide a new binding material for use in binding agricultural chemicals containing heterocyclic rings, that can be used with aqueous samples, and/or methods using these binding materials, or at least to provide the public with a useful choice.

### DISCLOSURE OF THE INVENTION

In one aspect, the invention provides an imprinted polymer imprinted with an agricultural chemical molecule having a heterocyclic ring, wherein the matrix of said polymer has been prepared from one or more monomers including bilirubin or a mono-or di-ester or amide thereof, preferably bilirubin, and wherein the heterocyclic ring has 1-3 nitrogen atoms. In a further aspect, the invention provides a method for preparing such an imprinted polymer comprising polymerising one or more monomers including bilirubin or a mono- or di-ester or amide thereof in the presence of an agricultural chemical molecule, having a heterocyclic ring, to be imprinted, or an analogue or derivative of the agricultural chemical molecule, and subsequently at least partly removing the molecule to be imprinted, wherein the agricultural chemical has a heterocyclic ring with 1-3 nitrogen atoms. The imprinted polymers according to the invention can be prepared in a variety of ways. The common feature is that the imprinting molecule is incorporated during the polymerisation or crosslinking process and then later removed. In one alternative bilirubin-containing polymers are crosslinked in the presence of the agricultural chemical.

Preferably the polymerisation is an alkene polymerisation. Preferably in addition to bilirubin (or a mono-or di-ester or amide thereof) the mixture contains one or more further alkenes having more than one alkene group, for example monomers containing two acrylate or two methacrylate groups or one of each type of group or three or more groups independently selected from acrylate and methacrylate. These types of monomers serve as crosslinkers. The polymerisation may also include monoalkenes e.g. methacrylic acid, vinylpyridines, hydroxyethylmethacrylate, acrylamide. These serve as co-monomers.

Non-covalent interactions between the imprinting molecule and the polymer are generally used. The polymer is formed by adding the imprinting molecule during formation or crosslinking of the polymer. The polymer is selected so there will be electrostatic interaction, hydrogen bond formation or hydrophobic interactions with the imprinting molecule creating binding sites for the imprinting molecule.

Preferred noncovalently imprinted polymers include bilirubin-containing crosslinked polyacrylates and polymethacrylates, preferably bilirubin-containing crosslinked polymethacrylates. The preferred crosslinker is ethyleneglycoldimethacrylate. Preferably the mole ratio of co-monomer to crosslinker is in the ratio 0:1 to 1:15 preferably 0:1 to 1:10. The preferred mole ratio of bilirubin to the crosslinker is 1:20 to 1:1, preferably 1:20 to 1:4.

In preferred embodiments of the invention the polymer to be used in the assay is ground repeatedly to reduce non-specific binding. Preferably the particle size of at least 50% by weight of the polymer is in the range 38 to 150 microns. More preferably more than 80% of the material consists of particles in that size range.

The imprinting molecule may be removed by extraction with a suitable solvent. Soxhlet extraction using an appropriate solvent is preferred.

Binding of the imprinting molecule to the above described polymers may be detected in a manner analogous to radioimmunoassays. For example radiolabelled imprinting molecule (for example [C¹⁴ or ³H] imprinting molecule) may be incorporated into a sample. Binding of the radioactive imprinting molecule to the polymer will be inversely related to the amount of imprinting molecule present in the sample. The binding of the imprinting molecule may be determined after separating the polymer from the liquid medium. This may conveniently be achieved by centrifugation.

Alternatively imprinting molecule binding to bilirubin-containing polymers may be detected by for example change in fluorescence of the polymer. Detection of the binding may also be by detecting unbound imprinting molecule by the high-pressure liquid chromatography (HPLC) method or a detection method appropriate for the target molecule.

In this specification an "agricultural chemical" means chemical products used in agriculture, including insecticides, herbicides, acaricides, anthelmintics and fungicides. In certain preferred embodiments the agricultural chemical is a fungicide. The term "agriculture" means the cultivation of animals, plants, fungi, and other life forms for the purpose of providing food, fibre, bio-fuel, drugs and other products used to sustain and enhance human life.

In this specification an "analogue or derivative" of a agricultural chemical molecule is a molecule that has the same basic structure as the agricultural chemical to be imprinted, and when used to imprint a polymer, produces a polymer that binds the agricultural chemical more strongly than the corresponding non-imprinted polymer. The analogue or derivative will also generally bind to a polymer imprinted with the agricultural chemical, more strongly than to a non-imprinted polymer. The analogue or derivative generally has the same ring structure.

In another aspect, the invention provides a method for the removal of an agricultural chemical having a heterocyclic ring from an aqueous liquid, preferably a drink or an ingredient of a drink or food, comprising:
a) contacting an imprinted polymer imprinted with the agricultural chemical molecule, wherein the matrix of the polymer has been prepared from one or more monomers including bilirubin or a mono-or di-ester or amide thereof, with an aqueous liquid to remove at least a portion of the agricultural chemical, and
b) separating the aqueous liquid with decreased agricultural chemical content from the polymer binding agricultural chemical,
wherein the heterocyclic ring has 1-3 nitrogen atoms.

In a further aspect, the disclosure provides a method for removal of an agricultural chemical having a heterocyclic ring from an aqueous liquid, preferably a drink or an ingredient of a drink or food, comprising:
a) contacting an imprinted polymer prepared by polymerising one or more monomers including bilirubin or a mono-or di-ester or amide thereof in the presence of the agricultural chemical molecule or an analogue or derivative of the agricultural chemical molecule, and subsequently at least partly removing the agricultural chemical molecule, and
b) separating the aqueous liquid with decreased agricultural chemical content from the polymer binding agricultural chemical, wherein the heterocyclic ring has 1-3 nitrogen atoms.

The contacting may involve passage of the aqueous liquid through a filter formed from or coated with the imprinted polymer. Such a filter may be formed from another polymer and have the imprinted polymer coated on it. Alternatively the filter may be a bed of particles of the imprinted polymer.

The contacting may alternatively be achieved by coating a paddle or stirrer with the imprinted polymer. The polymer may for example be coated onto Teflon. Imprinted polymer coated paddles and stirrers are advantageously used with an aqueous liquid that is difficult to filter.

The separating includes passage of the liquid so that it is no longer in contact with the imprinted polymer. This includes movement to an area away from a filter formed from or coated with the imprinted polymer. Separating also includes physical removal of a paddle or stirrer coated with the imprinted polymer from aqueous liquid with decreased agricultural chemical content.

The invention is useful for removing an agricultural chemical from aqueous liquids that have contamination with an agricultural chemical having a heterocyclic ring with 1-3 nitrogen atoms, including waste water, alcoholic beverages, non-alcoholic beverages and food ingredients. The invention may also be used to remove such an agricultural chemical from aqueous plant-derived fertiliser. Alcoholic beverages that may be treated using the method of the invention typically comprise up to 20% (w/v) ethanol. For example, the method may be used with beer, rice wine and wine. The method is particularly useful for wine. The method may also be used at higher alcohol contents, for example with whiskeys. In particularly preferred methods, the aqueous liquid is wine and the agricultural chemical is selected from pyrimethanil, fluopyram and pirimiphos-methyl, especially pyrimethanil.

Non-alcoholic beverages usefully treated using the polymer included water, carbonated drinks and fruit based drinks. Other food ingredients usefully treated include milk, including cows' milk, goats' milk and sheep's milk, and oils, including fish oils.

Separation may be achieved by allowing the polymer to settle out of the liquid and decanting the treated liquid. The separating may be achieved in a filtration process by allowing the liquid to pass through the filter. A centrifugation step may also be used to separate the treated liquid from the polymer.

The polymer may be reused. Bound agricultural chemicals may be released by, for example, contacting the polymer with acid. Such a change may be achieved by washing the polymer with an aqueous acid, for example aqueous HCl. A pH of 1-3 is preferred. Other methods of releasing agricultural chemicals include washing with an organic solvent or a mixture of an organic solvent and water. An increased temperature may also be used to remove bound agricultural chemicals.

One advantage of the invention is that it allows the increased use of agricultural chemical closer to the harvest date than previously. This can lead to reduced crop losses and higher quality product once the agricultural chemical residue has been removed.

In preferred agricultural chemicals, the heterocyclic ring with 1-3 nitrogen atoms is 5- or 6-membered.

In one embodiment, the agricultural chemical molecule used in forming the imprinted polymer has a single nitrogen in a non-aromatic 5 or 6 membered heterocycle, preferably a 5 membered heterocycle, for example captan or procymidone.

In another embodiment, the agricultural chemical molecule used in forming the imprinted polymer has a heterocyclic ring with two nitrogens, preferably a pyrazole ring, more preferably fipronil.

In another embodiment, the agricultural chemical molecule used in forming the imprinted polymer has three nitrogens in a heterocyclic ring, and is preferably selected from azaconazole, azinphos-methyl, flusilazole, imidacloprid, myclobutanil and thiabendazole.

In another embodiment, the agricultural chemical molecule used in forming the imprinted polymer has a pyridine ring and is preferably selected from azoxystrobin, boscalid, diquat, imidacloprid, iprodione, fluopyram, paraquat and thiabendazole.

In another embodiment, the agricultural chemical molecule used in forming the imprinted polymer has an aromatic ring with two nitrogens, preferably a pyrimidine ring. Preferred compounds include diazinon, imazalil, pirimicarb, pirimiphos-methyl, pyrimethanil and trifloxystrobin.

A particularly preferred compound for imprinting polymers used in the invention is pyrimethanil, a fungicide widely used in treating grapevines.

Other particularly preferred compounds include fluopyram and pirimiphos-methyl.

The compounds and groups of compounds specifically identified are preferred as imprinting molecules and as target molecules to be removed in the methods of removal of agricultural chemicals.

The molecules removed will not always only be identical to the imprinting molecule. Molecules of similar structure to the imprinting molecule will bind to the imprinted polymer. The invention contemplates use of an imprinted polymer where the imprinting is done with a molecule that is sufficiently similar to the target agricultural chemical that it provides an imprinted polymer that specifically binds the target agricultural chemical.

Whether a molecule of similar structure can be used to prepare an imprinted polymer that will bind to a particular agricultural chemical can be checked by conducting a test similar to that exemplified to assess whether the agricultural chemical binds to the imprinted polymer in a clearly more specific manner than to the corresponding non-imprinted polymer.

Certain preferred aspects of the invention will now be described in relation to the following non-limiting examples.

### BRIEF DESCRIPTIONS OF THE DRAWINGS

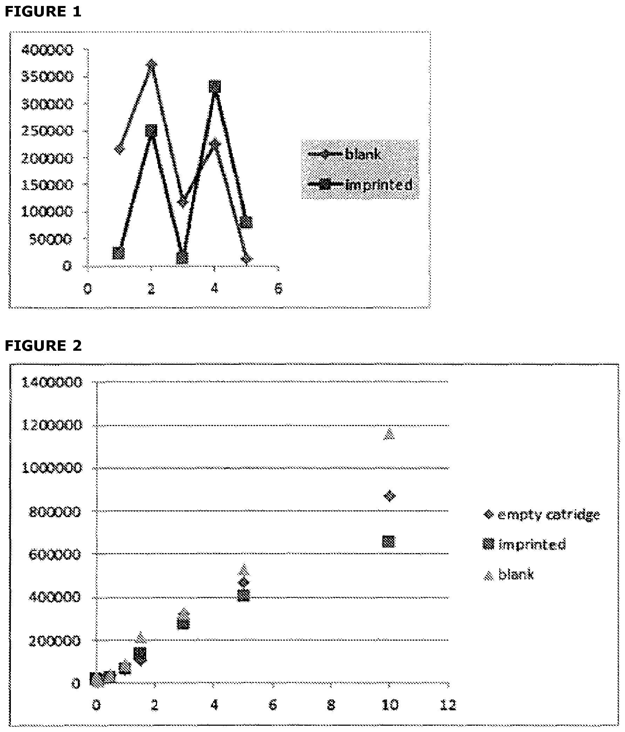

Figure 1 shows a comparison of the pyrimethanil concentrations in (1) a prewash of a cartridge containing polymer particles (2) eluate after washing through test solution 15% ethanol spiked with pyrimethanil, (3) water wash, (4) 0.1M HCI wash, (5) subsequent water wash for ◆ blank and ■ imprinted polymers.
Figure 2 shows the pyrimethanil concentrations of test solutions spiked with pyrimethanil plotted against initial pyrimethanil concentrations after the test solutions have passed through an ◆ empty cartridge, a ■ cartridge containing particles of imprinted polymer and a ▲ cartridge containing particles of blank polymer.

### EXAMPLE 1 - Pyrimethanil

### Preparation of polymers

The polymers were prepared by mixing 20 mg pyrimethanil with 11.5 mg bilirubin; 0.97 ml ethylenedimethylacrylic acid (EDMA) and 5 ml methanol, then adding 20 mg 1,1'-azobis (cyclohexanecarbonitrile) (ABCHC, initiator). The mixture was polymerized in a water bath at 65 degrees Celsius for 24 h. The polymer was ground, sieved, and particle sorted to give 30-63 micrometer particles. The target molecule was removed by Soxhlet extraction with methanol. Suspensions (100 mg/mL) were performed in 15% ethanol/water as the polymer was tested mainly in this matrix. A blank polymer was made at the same time, treated the same, but with no pyrimethanil used in its preparation.

### Removal of pyrimethanil from test solutions

Polymer suspensions were loaded in 10 micron cut-off cartridges to give a packed volume of 500 mg polymer in each filter and the test solution was passed through. In a typical experiment, the following fractions were passed through a cartridge:
- 30 mL water
- 50 mL test solution containing pyrimethanil
- 80 mL water
- 30 mL 0.1M HCl
- 100 mL water.
The test solution was between 0.1 and 10ppm, to match concentrations found in wine samples. It was found that 50 mL HCl 0.1M was enough to remove the pyrimethanil bound to the polymer particle and regenerate for a further test. Test solutions were either 15% ethanol-water or wine spiked with known amounts of pyrimethanil.

The optimum speed of the pump was determined to be about 200 mL/min after each solution was passed, air was flushed at 900 ml/min through the casing containing the polymer filter to remove any solution trapped, then the speed was brought back down to approx. 200 mL/min.

For this polymer, at a rate of about 200 mL/min, we can define B/T (bound/total) as the amount of analyte we are binding out of a known solution. Ideally an imprinted polymer will bind all the analyte present and the blank polymer will bind a minimum amount. For this speed, B/T of imprinted polymer was 0.75 and B/T for blank was 0.5. See Figure 1.

The B/T can be reflected in a lower concentration in the second point (concentration of test solution after going through imprinted or blank polymer). A good rinse cycle should have a higher peak in the fourth point; this is the HCl rinse (Figure 1). Figure 1 shows a comparison of the pyrimethanil concentrations in (1) a prewash of a cartridge containing polymer particles (2) eluate after washing through test solution 15% ethanol spiked with pyrimethanil, (3) water wash, (4) 0.1M HCl wash, (5) subsequent water wash for ◆ blank and ■ imprinted polymers. If a mass balance is done on what the polymer has taken out from the test solution or the wine, blank polymers usually yield slightly under or lower yields (due to non-specific binding) and imprinted polymers are quite consistently accounting for the whole amount of pyrimethanil that was passed through.

Figure 2 shows the pyrimethanil concentrations of test solutions spiked with a pyrithanil plotted against initial pyrimethanil concentrations after the test solutions have passed through an ◆ empty cartridge, a ■ cartridge containing particles of imprinted polymer and a ▲ cartridge containing particles of blank polymer.

Pyrimethanil is removed more effectively from the solutions when the imprinted polymer is used, particularly at higher pyrimethanil concentrations.

### Removal from wine

Pyrimethanil-imprinted polymer was placed in contact with wine (0.1 mL suspension and 0.9 ml wine) for 5 min, centrifuged, and supernatant was analysed via HPLC methods. 90% of the pyrimethanil was removed. A large batch of wine was passed through a polymer bed and pyrimethanil was completely removed from the wine.

With wine, negative B/T values were obtained and the blank leached previously trapped pyrimethanil into the wine sample.

### EXAMPLE 2 - Fluopyram

The polymer was made by mixing 0.1mmol fluopyram, 0.2mmol bilirubin, 2mmol EDMA, 15 mL methanol and 20 mg ABCHC, followed by thermal polymerisation at 70degrees Celsius for 20h. The resulting block of polymer was ground, sieved, sedimented, and the resulting 30-63 micrometer particles were subjected to Soxhlet extraction with methanol to remove the target molecule, dried, then suspended in 15% ethanol at a 100 mg/mL suspension concentration. This suspension was tested against a test solution containing fluopyram in 15% ethanol.

At the same time as the imprinted polymer a control polymer was developed that included the same materials as above but no fluopyram. This was used to distinguish between adsorption and specific binding in the polymer. Binding reported as specific binding is the difference between binding in the imprinted polymer and the control as this is considered to be due to interactions occurring in the active cavities of the polymer.

For fluopyram, tests were performed as following: 0.1 mL polymer suspension were placed in contact with 0.9 mL test solution (25ppm fluopyram in 15% ethanol) in 1.5mL eppendorf tubes. The tubes were mixed on an orbital shaker for 4h, the suspensions were then centrifuged for 5min at 13000rpm and the supernatant was analysed by HPLC.
The imprinted polymer bound 85% of the analyte present in the test solution and the control bound 43%, hence the specific binding was 42% overall. Tests at 24h showed complete removal of fluopyram in the imprinted polymer and 45% in the control.

### EXAMPLE 3 - Pirimiphos-methyl

The polymer was developed by mixing 0.2mmol template pirimiphos-methyl, 0.2mmol
bilirubin, mmol EDMA, 15 mL methanol, and 40 mg ABCHC followed by thermal polymerisation at 70 degrees Celsius for 20h. The polymer was ground, sieved, sedimented, and the resulting 30-63 micrometer particles were subjected to Soxhlet extraction with methanol to remove the target molecule, dried, and resuspended in 15% ethanol at a 100 mg/mL suspension concentration. This suspension was tested against a test solution containing pirimiphos at 25 ppm in 15% ethanol.

At the same time the imprinted polymer was synthesized and processed a control polymer that did not contain the template was subjected to the same process and specific binding is reported as difference between binding in the imprinted and non-imprinted polymer.

Tests were performed as following: 0.1mL polymer suspension were placed in contact with 0.9 mL test solution in 1.5mL eppendorf tubes. The tubes were agitated on an orbital shaker for 24h, centrifuged at 13000rpm for 5 min and the supernatant was analysed. The binding in the imprinted polymer was 67% of total test solution and binding in the control was 13%.

The term "comprising" as used in this specification means 'consisting at least in part of', that is to say when interpreting statements in this specification which include that term, the features, prefaced by that term in each statement, all need to be present but other features can also be present.

## Claims

1. An imprinted polymer imprinted with an agricultural chemical molecule having a heterocyclic ring, wherein the matrix of said polymer has been prepared from one or more monomers including bilirubin or a mono- or di-ester or amide thereof, and wherein the heterocyclic ring has 1-3 nitrogen atoms.

2. A polymer as claimed in claim 1 wherein the monomers include one or more further alkenes having more than one alkene group.

3. A polymer as claimed claim 1 or claim 2 wherein the agricultural chemical molecule used in forming the imprinted polymer has a single nitrogen in a non-aromatic 5 or 6 membered heterocycle, preferably a 5 membered heterocycle, for example captan or procymidone.

4. A polymer as claimed in claim 1 or claim 2 wherein the agricultural molecule used in forming the imprinted polymer has a heterocyclic ring with two nitrogens, preferably a pyrazole ring, more preferably fipronil.

5. A polymer as claimed in claim 1 or claim 2 wherein the agricultural chemical molecule used in forming the imprinted polymer has three nitrogens in a heterocyclic ring, and is preferably selected from azaconazole, azinphos-methyl, flusilazole, imidacloprid, myclobutanil and thiabendazole.

6. A polymer as claimed in claim 1 or claim 2 wherein the agricultural chemical molecule used in forming the imprinted polymer has a single nitrogen in an aromatic pyridine ring and is preferably selected from azoxystrobin, boscalid, diquat, imidacloprid, iprodione, fluopyram, paraquat and thiabendazole.

7. A polymer as claimed in claim 1 wherein the agricultural chemical molecule used in forming the imprinted polymer has an aromatic ring with two nitrogens, preferably a pyrimidine ring, preferably a diazinon, imazalil, pirimicard, pirimiphos-methyl, pyrimethanil and trifloxystrobin.

8. A method for preparing an imprinted polymer comprising polymerising one or more monomers including bilirubin or a mono- or di-ester or amide thereof in the presence of an agricultural chemical molecule to be imprinted, or an analogue or derivative of the agricultural chemical molecule, and subsequently at least partly removing the molecule to be imprinted, wherein the agricultural chemical has a heterocyclic ring with 1-3 nitrogen atoms.

9. A method as claimed in claim 8 wherein the bilirubin-containing polymers are crosslinked in the presence of the agricultural chemical.

10. A method as claimed in claim 8 wherein in addition to bilirubin, or a mono-or di-ester or amide thereof, a mixture of bilirubin, or a mono- or di-ester or amide thereof, and one or more further alkenes having more than one alkene group is polymerised.

11. A method for the removal of an agricultural chemical having a heterocyclic ring from an aqueous liquid, comprising:
a) contacting an imprinted polymer imprinted with the agricultural chemical molecule, wherein the matrix of the polymer has been prepared from one or more monomers including bilirubin or a mono-or di-ester or amide thereof, with an aqueous liquid to remove at least a portion of the agricultural chemical, and
b) separating the aqueous liquid with decreased agricultural chemical content from the polymer binding agricultural chemical,
wherein the heterocyclic ring has 1-3 nitrogen atoms.

12. A method as claimed in claim 11 wherein the aqueous liquid comprises up to 20% (w/v) ethanol.

13. A method as claimed in claim 12 wherein the aqueous liquid is wine and the agricultural chemical is selected from pyrimethanil, fluopyram and pirimiphos-methyl.

14. A method as claimed in claim 13 where the agricultural chemical is pyrimethanil.

15. A method as claimed in any one of claims 11-14 wherein the agricultural chemical is removed by filtration through a filter comprising or coated with the imprinted polymer.

## Patentansprüche

1. Geprägtes Polymer, das mit einem landwirtschaftlichen chemischen Molekül geprägt ist, das einen heterocyclischen Ring aufweist, wobei die Matrix des Polymers aus einem oder mehreren Monomeren, die Bilirubin oder einen Mono- oder Diester oder ein Amid davon umfassen, hergestellt ist und wobei der heterocyclische Ring 1-3 Stickstoffatome aufweist.

2. Polymer gemäß Anspruch 1, wobei die Monomere ein oder mehrere weitere Alkene mit mehr als einer Alkengruppe umfassen.

3. Polymer gemäß Anspruch 1 oder Anspruch 2, wobei das landwirtschaftliche chemische Molekül, das bei der Herstellung des geprägten Polymers verwendet wird, einen einzelnen Stickstoff in einem nichtaromatischen 5- oder 6-gliedrigen Heterocyclus, vorzugsweise einem 5-gliedrigen Heterocyclus, aufweist, beispielsweise Captan oder Procymidin.

4. Polymer gemäß Anspruch 1 oder Anspruch 2, wobei das landwirtschaftliche Molekül, das bei der Herstellung des geprägten Polymers verwendet wird, einen heterocyclischen Ring mit zwei Stickstoffen aufweist, vorzugsweise einen Pyrazolring, bevorzugter Fipronil.

5. Polymer gemäß Anspruch 1 oder Anspruch 2, wobei das landwirtschaftliche chemische Molekül, das bei der Herstellung des geprägten Polymers verwendet wird, drei Stickstoffe in einem heterocyclischen Ring aufweist und vorzugsweise ausgewählt ist aus Azaconazol, Azinphos-Methyl, Flusilazol, Imidacloprid, Myclobutanil und Thiabendazol.

6. Polymer gemäß Anspruch 1 oder Anspruch 2, wobei das landwirtschaftliche chemische Molekül, das bei der Herstellung des geprägten Polymers verwendet wird, einen einzelnen Stickstoff in einem aromatischen Pyridinring aufweist und vorzugsweise ausgewählt ist aus Azoxystrobin, Boscalid, Diquat, Imidacloprid, Iprodion, Fluopyram, Paraquat und Thiabendazol.

7. Polymer gemäß Anspruch 1, wobei das landwirtschaftliche chemische Molekül, das bei der Herstellung des geprägten Polymers verwendet wird, einen aromatischen Ring mit zwei Stickstoffen aufweist, vorzugsweise einen Pyrimidinring, vorzugsweise ein Diazinon, Imazalil, Pirimicard, Pirimiphos-Methyl, Pyrimethanil und Trifloxystrobin.

8. Verfahren zur Herstellung eines geprägten Polymers, umfassend Polymerisieren eines oder mehrerer Monomere, die Bilirubin oder einen Mono- oder Diester oder ein Amid davon umfassen, in Gegenwart eines landwirtschaftlichen chemischen Moleküls, das geprägt werden soll, oder eines Analogons oder Derivats des landwirtschaftlichen chemischen Moleküls, und anschließend wenigstens teilweise Entfernen des Moleküls, das geprägt werden soll, wobei die landwirtschaftliche Chemikalie einen heterocyclischen Ring mit 1-3 Stickstoffatomen aufweist.

9. Verfahren gemäß Anspruch 8, wobei die Bilirubinenthaltenden Polymere in Gegenwart der landwirtschaftlichen Chemikalie vernetzt werden.

10. Verfahren gemäß Anspruch 8, wobei zusätzlich zu Bilirubin oder einem Mono- oder Diester oder Amid davon ein Gemisch von Bilirubin oder einem Mono- oder Diester oder Amid davon und einem oder mehreren weiteren Alkenen mit mehr als einer Alkengruppe polymerisiert wird.

11. Verfahren zum Entfernen einer landwirtschaftlichen Chemikalie, die einen heterocyclischen Ring aufweist, aus einer wässrigen Flüssigkeit, umfassend:
a) Inkontaktbringen eines geprägten Polymers, das mit dem landwirtschaftlichen chemischen Molekül geprägt ist, wobei die Matrix des Polymers aus einem oder mehreren Monomeren hergestellt worden ist, die Bilirubin oder einen Mono- oder Diester oder ein Amid davon umfassen, mit einer wässrigen Flüssigkeit, um wenigstens einen Teil der landwirtschaftlichen Chemikalie zu entfernen, und
b) Abtrennen der wässrigen Flüssigkeit mit verringertem Gehalt an landwirtschaftlicher Chemikalie von der Polymer-bindenden landwirtschaftlichen Chemikalie,
wobei der heterocyclische Ring 1-3 Stickstoffatome aufweist.

12. Verfahren gemäß Anspruch 11, wobei die wässrige Flüssigkeit bis zu 20 % (Gew./Vol.) Ethanol umfasst.

13. Verfahren gemäß Anspruch 12, wobei die wässrige Flüssigkeit Wein ist und die landwirtschaftliche Chemikalie ausgewählt ist aus Pyrimethanil, Fluopyram und Pirimiphis-Methyl.

14. Verfahren gemäß Anspruch 13, wobei die landwirtschaftliche Chemikalie Pyrimethanil ist.

15. Verfahren gemäß einem der Ansprüche 11-14, wobei die landwirtschaftliche Chemikalie durch Filtration durch einen Filter entfernt wird, der das geprägte Polymer umfasst oder damit beschichtet ist.

## Revendications

1. Polymère imprimé, imprimé par une molécule chimique agricole ayant un cycle hétérocyclique, où la matrice dudit polymère a été préparée à partir d'un ou plusieurs monomères comportant de la bilirubine ou un mono- ou diester ou un amide de celle-ci, et où le cycle hétérocyclique possède 1-3 atomes d'azote.

2. Polymère selon la revendication 1, dans lequel les monomères comportent un ou plusieurs autres alcènes ayant plus d'un groupement alcène.

3. Polymère selon la revendication 1 ou la revendication 2, dans lequel la molécule chimique agricole utilisée dans la formation du polymère imprimé possède un azote unique dans un hétérocycle de 5 ou 6 chaînons non aromatique, préférablement un hétérocycle de 5 chaînons, par exemple un captan ou une procymidone.

4. Polymère selon la revendication 1 ou la revendication 2, dans lequel la molécule agricole utilisée dans la formation du polymère imprimé possède un cycle hétérocyclique ayant deux azotes, préférablement un cycle pyrazole, plus préférablement le fipronil.

5. Polymère selon la revendication 1 ou la revendication 2, dans lequel la molécule chimique agricole utilisée dans la formation du polymère imprimé possède trois azotes dans un cycle hétérocyclique, et est choisie de préférence parmi l'azaconazole, l'azinphos-méthyle, le flusilazole, l'imidacloprid, le myclobutanil et le thiabendazole.

6. Polymère selon la revendication 1 ou la revendication 2, dans lequel la molécule chimique agricole utilisée dans la formation du polymère imprimé possède un azote unique dans un cycle pyridine aromatique, et est choisie de préférence parmi l'azoxystrobine, le boscalide, le diquat, l'imidacloprid, l'iprodione, le fluopyram, le paraquat et le thiabendazole.

7. Polymère selon la revendication 1, dans lequel la molécule chimique agricole utilisée dans la formation du polymère imprimé possède un cycle aromatique ayant deux azotes, préférablement un cycle pyrimidine, plus préférablement le diazinon, l'imazalil, le pirimicarb, le pirimiphos-méthyle, le pyriméthanil et la trifloxystrobine.

8. Méthode de préparation d'un polymère imprimé, comprenant la polymérisation d'un ou plusieurs monomères comportant de la bilirubine ou un mono- ou diester ou un amide de celle-ci, en présence d'une molécule chimique agricole devant être imprimée, ou d'un analogue ou dérivé de la molécule chimique agricole, puis l'élimination au moins partielle de la molécule à imprimer, où la substance chimique agricole possède un cycle hétérocyclique ayant 1-3 atomes d'azote.

9. Méthode selon la revendication 8, dans laquelle les polymères contenant de la bilirubine sont réticulés en présence de la substance chimique agricole.

10. Méthode selon la revendication 8, dans laquelle, outre la bilirubine, ou un mono- ou diester ou un amide de celle-ci, un mélange de bilirubine, ou d'un mono- ou diester ou d'un amide de celle-ci, et d'un ou plusieurs autres alcènes ayant plus d'un groupement alcène, est polymérisé.

11. Méthode d'élimination d'une substance chimique agricole ayant un cycle hétérocyclique à partir d'un liquide aqueux, comprenant :
a) la mise en contact d'un polymère imprimé, imprimé par la molécule chimique agricole, où la matrice du polymère a été préparée à partir d'un ou plusieurs monomères comportant de la bilirubine ou un mono- ou diester ou un amide de celle-ci, avec un liquide aqueux, afin d'éliminer au moins une portion de la substance chimique agricole, et
b) la séparation du liquide aqueux ayant une teneur réduite en substance chimique agricole et du polymère liant la substance chimique agricole,
où le cycle hétérocyclique possède 1-3 atomes d'azote.

12. Méthode selon la revendication 11, dans laquelle le liquide aqueux comprend jusqu'à 20% (p/v) d'éthanol.

13. Méthode selon la revendication 12, dans laquelle le liquide aqueux est constitué de vin et la substance chimique agricole est choisie parmi le pyriméthanil, le fluopyram et le pirimiphos-méthyle.

14. Méthode selon la revendication 13, dans laquelle la substance chimique agricole est le pyriméthanil.

15. Méthode selon l'une quelconque des revendications 11-14, dans laquelle la substance chimique agricole est éliminée par filtration sur un filtre comprenant, ou revêtu par, le polymère imprimé.
